# EUROPEAN PATENT SPECIFICATION

(11) **EP 3 111 691 B1**
(45) Date of publication and mention of the grant of the patent: **14.04.2021**
(21) Application number: 15751445.6
(22) Date of filing: 22.01.2015
(51) Int. Cl.: H04W 36/00, H04W 36/04, H04W 72/04

(54) **MEASUREMENT GAP PATTERNS**
MESSLÜCKENMUSTER
MODÈLES D'INTERVALLES DE MESURES

(30) Priority: 24.02.2014 US 201461943982 P
(43) Date of publication of application: 04.01.2017
(73) Proprietor: Apple Inc., Cupertino, CA 95014 (US)
(72) Inventor: TANG, Yang, Pleasanton, California 94588 (US); YIU, Candy, Beaverton, Oregon 97007 (US); HUANG, Rui, Beijing 100085 (CN); ZHANG, Yujian, Beijing 100081 (CN)
(74) Representative: Lang, Johannes
(86) International application number: PCT/US2015/012498
(87) International publication number: WO 2015/126568

(56) References cited:
- WO-A1-2008/085952
- US-A1- 2007 037 601
- US-A1- 2011 080 962
- US-A1- 2012 178 465
- US-A1- 2013 040 640
- US-A1- 2013 308 481
- INTEL CORPORATION: "Further considerations on the measurement gap pattern in HeNet", 3GPP DRAFT; R4-140613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Prague, Czech Republic; 20140210 - 20140214 9 February 2014 (2014-02-09), XP050740319, Retrieved from the Internet: URL:http://www.3gpp.org/ftp/Meetings_3GPP_ SYNC/RAN/RAN4/Docs/ [retrieved on 2014-02-09]
- MOTOROLA: "Configuring measurement gaps for monitoring multiple inter-frequency and inter-RAT layers", 3GPP DRAFT; R4-081433 CONFIGURING MEASUREMENT GAPS FOR MONITORING MULTIPLE INTER-FREQUENCY AND INTER-RAT LAYERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Munich, Germany; 20080623, 23 June 2008 (2008-06-23), XP050180002, [retrieved on 2008-06-23]
- SAMSUNG: "Discussion on measurement gap in dual connectivity", 3GPP DRAFT; R2-140237 MEASUREMENT GAP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech; 20140210 - 20140214 1 February 2014 (2014-02-01), XP050754364, Retrieved from the Internet: URL:http://www.3gpp.org/ftp/tsg_ran/WG2_RL 2/TSGR2_85/Docs/ [retrieved on 2014-02-01]
- ERICSSON: "Idle Gaps for Handover Measurements in E-UTRAN", 3GPP DRAFT; R2-070046, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20070112, 12 January 2007 (2007-01-12), XP050133163, [retrieved on 2007-01-12]
- NTT DOCOMO: "Discussion on issues for inter-frequency measurement", 3GPP DRAFT; R1-135516 DISCUSSION ON ISSUES FOR INTER-FREQUENCY MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. San Francisco, USA; 20131111 - 20131115 13 November 2013 (2013-11-13), XP050735189, Retrieved from the Internet: URL:http://www.3gpp.org/ftp/Meetings_3GPP_ SYNC/RAN/RAN1/Docs/ [retrieved on 2013-11-13]

## Description

### BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in an uplink (UL) transmission. Standards and protocols that use orthogonal frequency-division multiplexing (OFDM) for signal transmission include the third generation partnership project (3 GPP) long term evolution (LTE), the Institute of Electrical and Electronics Engineers (ΓEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3 GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

In homogeneous networks, the node, also called a macro node, can provide basic wireless coverage to wireless devices in a cell. The cell can be the area in which the wireless devices are operable to communicate with the macro node. Heterogeneous networks (HetNets) can be used to handle the increased traffic loads on the macro nodes due to increased usage and functionality of wireless devices. HetNets can include a layer of planned high power macro nodes (or macro-eNBs) overlaid with layers of lower power nodes (small-eNBs, micro-eNBs, pico-eNBs, femto-eNBs, or home eNBs [HeNBs]) that can be deployed in a less well planned or even entirely uncoordinated manner within the coverage area (cell) of a macro node. The lower power nodes (LPNs) can generally be referred to as "low power nodes", small nodes, or small cells. In LTE, data can be transmitted from the eNodeB to the UE via a physical downlink shared channel (PDSCH). A physical uplink control channel (PUCCH) can be used to acknowledge that data was received. Downlink and uplink channels or transmissions can use time-division duplexing (TDD) or frequency-division duplexing (FDD).

The publication of INTEL CORPORATION: "Further considerations on the measurement gap pattern in HeNet", 3GPP DRAFT; R4-140613, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE;vol. RAN WG4, no. Prague, Czech Republic; 20140210 - 20140214; 9 February 2014 (2014-02-09), XP050740319, Retrieved from the Internet: LIRL:http://www.3gpp.org/ftp/Meetings_3GPP_SYNC/RAN/RAN4/Docs/ [retrieved on 2014-02-09]; describes the measurement gap pattern in E-UTRA inter-frequency measurement in the HeNet deployment.

The publication of MOTOROLA: "Configuring measurement gaps for monitoring multiple inter-frequency and inter-RAT layers", 3GPP DRAFT; R4-081433 CONFIGURING MEASUREMENT GAPS FOR MONITORING MULTIPLE INTER-FREQUENCY AND INTER-RAT LAYERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE; vol. RAN WG4, no. Munich, Germany; 20080623, 23 June 2008 (2008-06-23), XP050180002, describes specifying behavior, performance requirements and UE testing for monitoring of multiple layers - inter-frequency LTE, inter-RAT UTRA and inter-RAT GSM.

The publication of SAMSUNG: "Discussion on measurement gap in dual connectivity", 3GPP DRAFT; R2-140237 MEASUREMENT GAP, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE; vol. RAN WG2, no. Prague, Czech; 0140210 - 20140214 1 February, 2014 (2014-02-01), XP050754364; URL:http://www.3gpp.org/ftp/tsg ran/WG2_RL2/TSGR2_85/Docs/ [retrieved on 2014-02-01]; describes a method to create a measurement gap that may be required for inter-frequency measurements of UEs.

ERICSSON, "Idle Gaps for Handover Measurements in E-UTRAN", 3GPP DRAFT; R2-070046, is directed toward the planning of "idle gap patterns" (i.e., focused on the spacing between multiple idle gaps) and discloses the use of "Dynamic Idle Gaps" which are generally created through negotiation between UE and Node B and the gap allocation involves closed loop mechanism via L2 signalling.

NTT DOCOMO, "Discussion on issues for inter-frequency measurement", vol. RAN WG1, GPP DRAFT; R1-135516 discloses evaluation results which indicate that almost all UEs in the tested small cell cluster area could achieve accurate detection of at least the best RSRP small cell by using these solutions with only 1 measurement sample, wherein a measurement gap length period varies based on the number of small cells for which a 1ms sample is to be taken during that time.

### STATEMENT OF INVENTION

The present invention is defined by the features of the independent claim(s). Preferred advantageous embodiments thereof are defined by the sub-features of the dependent claims.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates measurement gaps for multiple cells that each have a defined frequency layer in accordance with an example;
FIG. 2 illustrates signaling between an evolved node B (eNB) and a user equipment (UE) for configuring multiple measurement gap patterns in accordance with an example;
FIGS. 3-4 illustrate multiple measurement gap patterns for a user equipment (UE) in accordance with an example;
FIGS. 5A-5C illustrate multiple measurement gap patterns for a user equipment (UE) for various times in accordance with an example;
FIGS. 6-7 illustrate multiple measurement gap patterns for a user equipment (UE) in accordance with an example;
FIG. 8 depicts functionality of an evolved node B (eNB) operable to configure measurement gap patterns in accordance with an example;
FIG. 9 depicts functionality of a user equipment (UE) configured to perform inter-frequency measurements in accordance with an example;
FIG. 10 depicts a flowchart of a method for configuring measurement gap patterns in accordance with an example; and
FIG. 11 illustrates a diagram of a wireless device (e.g., UE) in accordance with an example.

### DETAILED DESCRIPTION

It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

A technology is described for configuring multiple measurement gap patterns for a user equipment (UE). The multiple measurement gap patterns can be generated by an evolved node B (eNB) and then the UE can be configured with the multiple measurement gap patterns. In one example, the multiple measurement gap patterns can be scheduled in one or more than one receive (Rx) chain at the UE. The UE can be configured to support carrier aggregation (CA). Therefore, the UE can support the simultaneous reception of two or more carriers in either a contiguous intra-band CA configuration or in an interband CA configuration. In other words, the UE can receive data at different RF frequencies. In addition, the UE can support non-contiguous (NC) carriers within bands. In the technology described herein, the UE can implement multiple measurement gap patterns for multiple Rx chains (or RF chains) because the UE supports carrier aggregation.

In one example, each measurement gap pattern can indicate at least one set of consecutive subframes within a defined time period during which the UE performs an inter-frequency measurement for a selected cell. The inter-frequency channel measurement can also be referred to as an inter-frequency and inter-radio access technology (RAT) measurement. The selected cell can be within a group of cells, wherein each cell in the group operates at a separate frequency layer and is measured using a particular measurement gap pattern. The inter-frequency measurements for the selected cell can be reference signal received power (RSRP) measurements or reference signal received quality (RSRQ) measurements. Therefore, the UE can perform the inter-frequency measurements for selected cells (each operating at a distinct frequency layer) within the group of cells according to the multiple measurement gap patterns. The group of cells for which the UE performs the inter-frequency measurements can be used for carrier aggregation or data offloading.

As a non-limiting example, a first measurement gap pattern can instruct the UE to perform the inter-frequency measurements for a first selected cell using a set of five consecutive subframes every 80 subframes. A second measurement gap pattern can instruct the UE to perform inter-frequency measurements for a second selected cell using a set of three consecutive subframes every 40 subframes. The first selected cell and the second selected cell can each operate at a distinct frequency layer. Thus, the UE can measure the first cell and the second cell according to distinct measurement gap patterns. In other words, the UE can simultaneously perform inter-frequency measurements for multiple cells (each at distinct frequency layers) based on the multiple measurement gap patterns.

In one configuration, the defined time period during which the UE performs the inter-frequency measurement for the selected cell can be referred to as a measurement gap repetition period (MGRP). The MGRP can be 40 milliseconds (ms), 80 ms, 120 ms, 160 ms, 200 ms or 240 ms. One subframe can correspond with 1 ms, so 40 ms corresponds with 40 subframes, 80 ms corresponds with 80 subframes, and so on. Thus, the UE can periodically perform the inter-frequency measurements for the selected cell every 40 seconds, every 80 subframes, etc. In addition, the MGRP can be variable based on a purpose of the inter-frequency measurements. For example, if the purpose is for cell identification, the UE can perform inter-frequency measurements for a first cell every 40 subframes. On the other hand, if the purpose is for cell measurement, the UE can perform the inter-frequency measurements for a second cell every 80 subframes. In another example, a measurement gap length (MGL) during which the UE performs the inter-frequency measurements for the selected cell is variable based on a location of synchronization symbols which are detected when the UE performs the inter-frequency measurements for the selected cell. The MGL can correspond with the set of consecutive subframes within the defined time period during which the UE performs the inter-frequency measurement for the selected cell. In one example, the MGL can range from a millisecond (ms) to 5 ms. In other words, the UE can spend 1-5 ms (out of the defined time period) performing the inter-frequency measurements for the selected cell. In another example, the selected cell within the group of cells can include a macro cell, a micro cell, a pico cell or a femto cell.

According to previous releases of the 3GPP LTE specification, the UE can perform inter-frequency or inter-radio access technology (inter-RAT) measurements. The UE can be served by a cell operating at a defined frequency (e.g., frequency 0), but can periodically monitor the channel quality of other cells operating at other frequency layers. When the UE monitors the channel quality of another cell, the UE switches its frequency to match the cell for which the measurements are performed. For example, in order to perform measurements for another cell operating at frequency 1, the UE has to temporarily switch its own default frequency (e.g., frequency 0) to frequency 1 in order to perform the measurements for the other cell operating at frequency 1. When the UE completes the measurements for the other cell, the UE can revert back to the default frequency (e.g., frequency 0) or switch to yet another frequency (e.g., frequency 2) associated with another cell in order to perform additional measurements. In one example, the other cells can be in proximity to the UE and/or used by the UE in certain situations (e.g., for data offloading). The channel quality measured by the UE can include reference signal received power (RSRP) measurements and/or reference signal received quality (RSRQ) measurements. The RSRP and RSRQ measurements can indicate a signal strength from the other cells operating at the other frequency layers.

When the UE performs the measurements of inter-frequency cells and inter-RAT cells, the UE can tune its receiver to a different carrier frequency. For example, the UE can switch the receive (Rx) carrier frequency from a default frequency (e.g., frequency 0 of the serving cell) to another frequency corresponding to the cell to be measured. The inter-frequency or inter-RAT measurements can be facilitated by configuring certain pause in uplink and downlink data transmission on all subcarriers and allowing the UE to perform inter-frequency or inter-RAT measurements in the pause period. Such pause periods or gaps in transmission are called measurement gaps. The UE does not need any measurement gaps for measurements of intra-frequency cells. During the measurement gaps, the UE does not transmit any data, nor does the UE transmit Sounding Reference Signal (SRS), CQI/PMI/RI and HARQ feedback. If there is uplink grant allocating resources in a measurement gap, then the UE processes the grant but the UE does not transmit in the allocated uplink resources. The UE also does not transmit in the subframe immediately after the measurement gap.

In legacy systems, the UE operates using a single Rx. If the UE is to perform measurements for multiple cells at multiple frequencies, then the UE has to switch between radio frequency (RF) chains. The RF chain can refer to a defined frequency at which one or more cells operate. In other words, by switching between different RF chains, the UE is switching between different frequencies in order to perform the measurements. As an example, if the UE switches from frequency 0 to frequency 1 in order to perform measurements of the cell operating at frequency 1, then the UE cannot receive data on frequency 0 during this period (i.e., the measurement gap). In other words, in legacy systems, the UE cannot receive data on frequency 0 when performing measurements for frequency 1. As a result, the UE's performance can be affected at frequency 0 since frequency 0 is the frequency at which the serving cell is located. In other words, frequency 0 can be the primary frequency at which data is transmitted or received at the UE.

According to previous releases of the 3GPP LTE specification, the UE can switch to a different frequency (i.e., a frequency other than a serving cell frequency) for 6 ms per 40 ms to perform inter-frequency measurements. In other words, the UE can spend 6 ms out of every 40 ms at the different frequency (e.g., frequency 1). Alternatively, the UE can spend 6 ms per 80 ms in another frequency in order to perform the inter-frequency measurements. When the UE measures an LTE carrier (e.g., frequency 1), the UE can capture a Primary Synchronization Signal (PSS) and a Secondary Synchronization Signal (SSS) in the 6 ms long gap, as PSS and SSS repeat every 5 ms. Also, the 6 ms long measurement gap includes enough cell-specific reference symbols for channel estimation. The 6 ms long measurement gap includes the margin for the UE to tune to the different LTE carrier (e.g., frequency 1) and get back to the serving LTE carrier (e.g., frequency 0).

During the measurement gap, the UE can perform inter-RAT measurements, which occurs when the UE in an LTE network monitors the channel conditions for, for example, a 3G network, a code division multiple access (CDMA) network, an Evolved Universal Terrestrial Radio Access Network (E-UTRAN), etc. The period of time during which the UE performs these measurements is referred to as the measurement gap. Therefore, in previous versions, the measurement gap can be defined as being 6 ms per 40 ms or 80 ms. During the measurement gap, the UE can use the available resources to perform the inter-frequency measurements. In general, the network can initially schedule a measurement gap pattern for the UE, and then the UE expects that same measurement gap pattern to be repeatedly scheduled for the rest of a defined duration. The UE can implement a new measurement gap pattern when the network sends additional signaling to alter an existing measurement gap pattern.

Thus, in previous versions, the UE generally expects the 6 ms measurement gap to occur substantially all the time for every 40 ms or 80 ms. As previously described, the UE does not perform uplink (UL) or downlink (DL) transmissions during this measurement gap (i.e., the 6 ms period). When the UE has to spend 6 ms out of every 40 ms for performing measurements, approximately 15% of the available resources are being used for such measurements (i.e., since the UE does not communicate in the UL or DL during this time). This 15% cannot be used for UE scheduling. As a result, the UE's throughput can be negatively affected due to the UE's performance of the measurements.

In one configuration, the UE can support carrier aggregation. In carrier aggregation, the UE can receive signals from multiple bands or cells simultaneously. Carrier aggregation can be used to increase the bandwidth, and thereby the bitrate. The UE can be allocated DL or UL resources on an aggregated resource consisting of two or more component carriers (CCs). A maximum of five component carriers can be aggregated. In one example, contiguous component carriers can be used that are all within the same operating frequency band. Alternatively, the component carriers can belong to different operating frequency bands. Although the UE can have multiple RF chains available during carrier aggregation (i.e., corresponding to the multiple frequencies associated with the component carriers), previous solutions describe a measurement gap pattern that does not account for the multiple RF chains.

In previous solutions, only a single measurement gap pattern can be used to measure the RF chain. The single measurement gap pattern can be used to perform measurements for a single RF chain. If the UE has two RF chains (e.g., the UE has to perform measurements at two other frequencies), then the UE still has to use the single gap measurement pattern to perform the measurements. Therefore, the technology described herein teaches using multiple measurement gap patterns per UE for one or more RF chains.

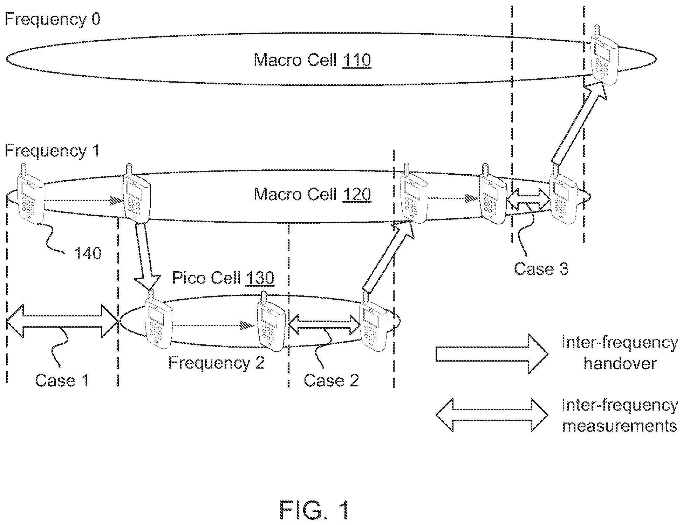

FIG. 1 illustrates exemplary measurement gaps for multiple cells that each have a defined frequency layer. In heterogeneous networks, certain types of cells operating at separate frequency levels can be deployed for offloading purposes. These cells can include, for example, macro cells, micro cells, pico cells, femto cells or relay cells. Macro cells generally described the widest range of cell sizes. Macro cells can be found in rural areas or along highways. Over a smaller cell area, a micro cell can be used in a densely populated urban area. Pico cells can be used in smaller areas than micro cells, such as in a large office, a mall, or a train station. Femto cells are used for a smaller area of coverage as compared with pico cells. For example, femto cells can be used in a home or small office. Relay cells use relatively low power and also provide coverage for relatively small areas. Each macro cell, micro cell, pico cell, etc. can operate at a distinct frequency layer (e.g., frequency 0, frequency 1, frequency 2 and so on).

As shown in FIG. 1, a first macro cell 110 can operate at frequency 0, a second macro cell 120 can operate at frequency 1, and a pico cell 130 can operate at frequency 2. Both the first macro cell 110 and the second macro cell 120 can have similar coverage areas, whereas the pico cell 130 can be deployed for offloading. In previous versions of the 3GPP LTE specification, the measurement gap is defined as periods (i.e., subframes) during which a user equipment (UE) 140 performs inter-frequency measurements. During this period, no downlink (DL) or uplink (UL) transmissions can be scheduled at the UE 140. The UE 140 can initially operate within the macro cell 110. In other words, the first macro cell 110 can be the serving cell for the UE 140. The UE 140 can perform measurements for all inter-frequency layers for each measurement gap period defined by the network. In this example, the UE 140 can perform the measurements for the second macro cell 120 (which operates at frequency 1) and the pico cell 130 (which operates at frequency 2).

The measurement gap can refer to the period during which the UE 140 performs the measurements for frequency 1 and frequency 2. The measurement gap does not refer to the period during which the UE 140 performs the measurements for frequency 0. Since the first macro cell 110 (corresponding to frequency 0) is the serving cell, the UE 140 can still receive or transmit data with the first macro cell 110 (i.e., the UE's serving cell) when performing measurements for frequency 0.

In one example, since the first macro cell 110 (corresponding to frequency 0) and the second macro cell 120 (corresponding to frequency 1) have similar coverage areas, the UE 140 within the first macro cell 110 can perform less frequent measurements for the second macro cell 120. The UE 140 can perform inter-frequency measurements for the pico cell 130 (corresponding to frequency 1) according to a standard periodicity. However, previous versions of the 3GPP LTE specification do not allow the network to configure different measurement gap patterns for different frequencies (e.g., various cells that operate in different frequencies). In addition, the previous versions of the 3GPP LTE specification do not allow the network to configure different measurement gap patterns based on a purpose for which the UE 140 performs the measurements.

The network's previous inability to configure multiple measurement gap patterns can increase the UE's power consumption level. When the measurement gap is relatively short in length, the UE 140 can perform measurements for often in all frequency layers. As a result, the UE 140 can consume additional power. In addition, since the UE 140 cannot perform DL/UL transmissions during the measurement gap, an overall data rate can be degraded. In addition, the network's previous inability to configure multiple measurement gap patterns can result in a relatively slow discovery of small cells. When the measurement gap is relatively long, the UE 140 can have less opportunity to discover neighboring cells. These problems can worsen when the number of small cells deployed and the number of frequency layers increase.

As shown in FIG. 1, the UE 140 can switch to frequency 1 in order to perform inter-frequency measurements with respect to the second macro cell 120 (as shown in case 1). After a certain period of time at frequency 1, the UE 140 can perform an inter-frequency handover and switch to frequency 2 (which corresponds with the pico cell 130). The UE 140 can initially operate in frequency 2, and after a certain period of time, the UE 140 can perform inter-frequency measurements with respect to the pico cell 130 (as shown in case 2). The UE 140 can perform an inter-frequency handover and switch back to frequency 1. The UE 140 can initially operate in frequency 1, and after a certain period of time, the UE 140 can perform inter-frequency measurements with respect to the second macro cell 120 (as shown in case 3). Thereafter, the UE 140 can perform an inter-frequency handover and switch back to the first macro cell 110 (which corresponds to frequency 1).

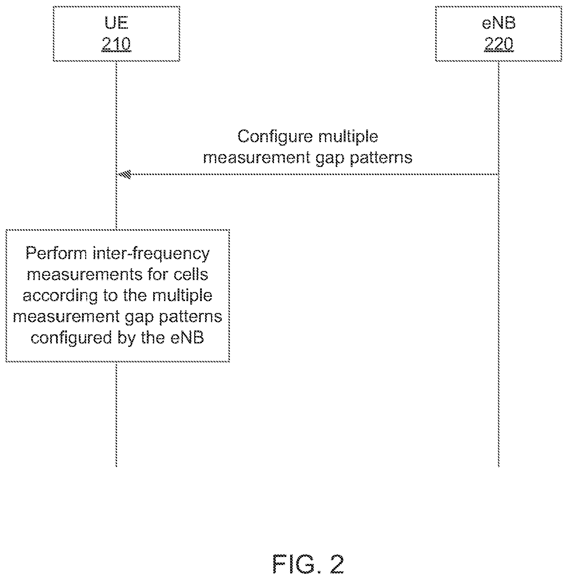

FIG. 2 illustrates exemplary signaling between an evolved node B (eNB) 220 and a user equipment (UE) 210 for configuring multiple measurement gap patterns. The eNB 220 can generate multiple measurement gap patterns for the UE 210. Each measurement gap pattern can indicate at least one set of consecutive subframes within a defined time period during which the UE 210 is to perform inter-frequency measurements for a selected cell. The eNB 220 can configure the multiple measurement gap patterns for the UE 210, wherein the UE 210 can perform the inter-frequency measurements for selected cells within a group of cells according to the multiple measurement gap patterns.

In one example, a measurement gap pattern can indicate during which subframes the UE 210 is to perform inter-frequency measurements. The inter-frequency measurements can include reference signal received power (RSRP) measurements or reference signal received quality (RSRQ) measurements. In one example, the UE 210 can perform the measurements for a particular cell (which operates at a defined frequency) during the measurement gap pattern. Alternatively, the UE 210 can perform the measurements for multiple cells (which each operate at separate frequencies) during the same measurement gap pattern.

In one example, the UE 210 can implement multiple measurement gap patterns for more than one radio frequency (RF) chain. The RF chain can refer to a defined frequency at which one or more cells operate. The UE 210 can perform parallel measurements at two separate RF chains. Each individual RF chain can be independently scheduled by the eNB 220. In other words, each measurement gap pattern for a corresponding cell (or RF chain) can be scheduled independently by the eNB 220. As an example, the UE 210 can perform measurements for a first RF chain (i.e., a first cell operating at a first frequency) according to a first measurement gap pattern. In addition, the UE 210 can perform measurements for a second RF chain (i.e., a second cell operating at a second frequency) according to a second measurement gap pattern. The first measurement gap pattern and the second measurement gap pattern can be independently scheduled by the eNB 220. Thus, the eNB 220 can configure the multiple measurement gap patterns for the UE 210 to enable the UE 210 to simultaneously perform inter-frequency measurements for multiple cells. In other words, the UE 210 can implement the first measurement gap pattern and the second measurement gap pattern in parallel in order to perform parallel measurements for multiple RF chains. Since the UE 210 can operate using carrier aggregation (i.e., receives multiple signals from multiple cells simultaneously), the inter-frequency measurements can be performed for the first RF chain at a time that overlaps with the performance of the inter-frequency measurements for the second RF chain. This is in contrast to previous versions of the LTE specification where the UE could not perform other tasks when performing the inter-frequency measurements (i.e., since the UE has a single Rx in previous solutions).

In one configuration, each cell within the group of cells operates in a defined frequency layer and is measured using a particular measurement gap pattern. The group of cells for which the UE 210 performs the inter-frequency measurements can be used for carrier aggregation or data offloading. In addition, the cells for which the UE 210 performs the inter-frequency measurements can include a macro cell, a micro cell, a pico cell or a femto cell.

As a non-limiting example, the measurement gap pattern can instruct the UE 210 to measure a first RF chain every 40 milliseconds (ms), wherein the 40 ms refers to the defined time period during which the UE 210 is to perform inter-frequency measurements. The defined time period in the measurement gap pattern can also be referred to as a measurement gap repetition period (MGRP). In other words, the UE 210 is to perform the measurements for the first RF chain per MGRP. In one example, the MGRP can be 40 ms, 80 ms, 120 ms, 160 ms, 200 ms or 240 ms. In general, the MGRP can be a multiple of 40 ms in order to maintain backwards compatibility. The UE 210 can measure the first RF chain by temporarily switching to the frequency at which the cell (which is associated with the RF chain) operates.

In one example, the UE 210 can support carrier aggregation, so the UE 210 can receive signals from multiple bands or cells simultaneously. When the UE 210 is performing measurements for a first RF chain, the UE 210 may still be able to transmit or receive data at a second RF chain. In other words, when the UE 210 is performing measurements for a first cell (which operates at a first frequency), the UE 210 can still transmit or receive data with a second cell (which operates at a second frequency). As a result, the UE 210 can perform the measurements for the first cell and the second cell independent of each other, without one measurement affecting the other.

In one configuration, the eNB 220 can simultaneously configure multiple measurement gap patterns per UE for one or more RF chains in parallel. Therefore, the network can optimize settings on different measurement gap patterns per frequency layer. In addition, the network has more flexibility to balance the measurement load across different RF chains. In one example, the measurement gap pattern can link to one or more frequency. In other words, a particular measurement gap pattern can perform measurements for both a first RF chain and a second RF chain. In another example, a measurement gap repetition period (MGRP) can be a multiple of the minimum gap to align UE measurements. As a result, the number of times that the UE 210 needs to perform the measurements can be minimized and measurement collisions can be avoided.

In one example, the UE 210 can modify the multiple measurement gap patterns based on current traffic conditions for particular cells. In general, the MGRP is periodic for a particular RF chain. For example, the UE 210 can perform measurements for a first RF chain and a second RF chain every 40 ms, respectively. When the UE 210 performs measurements for multiple RF chains, the UE 210 has the flexibility to balance the measurement load across different RF chains. The concurrent measurement of each frequency layer can be flexibly conducted either on one or across more than one RF chain. The measurement gap (i.e., the subframes during which the UE 210 performs the measurements) can consume a relatively large percentage of the downlink resources. If the UE 210 is using a significant amount of resources from the first RF chain (i.e., the first RF chain is busy) and a reduced amount of resources from the second RF chain (i.e., the second RF chain is less busy than the first RF chain), then the eNB 220 can assign an additional measurement load to the second RF chain and lessen the measurement load on the first RF chain. By lessening the measurement load on the first RF chain, the UE 210 can obtain additional subframes for UL/DL data transmissions (as opposed to channel measurements) with respect to the first RF chain. In other words, a density of the measurement gap can be reduced for the first RF chain for more DL receptions and UL transmissions. As a non-limiting example, by lessening the measurement load on the first RF chain, the amount of resources used by the UE 210 for the first RF chain can be reduced from 15% to 5% for a certain period of time. Since the UE 210 operates using carrier frequency, the UE 210 can still perform UL/DL transmissions on the first RF chain when measurements for the second RF chain are being performed. At a later time when the first RF chain has a lighter load than RF chain 2, the eNB 220 can rebalance the measurement load between the two RF chains. Thus, the eNB 220 can flexibly manage the measurement work across different RF chains.

In one configuration, a measurement gap length (MGL) during which the UE performs the inter-frequency measurements for the selected cell is variable. The MGL can correspond to the set of consecutive subframes within the defined time period. In one example, the MGL can range from 1 millisecond (ms) to 5 ms in length. The MGL can vary based on a location of synchronization symbols which are detected when the UE 210 performs the inter-frequency measurements for the selected cell.

In previous solutions, the MGL is a fixed length of 6 ms and is evenly distributed for a relatively long period of time. In other words, the 6 ms MGL for every 50 ms or 80 ms is fairly evenly distributed over the relatively long period of time. In the technology described herein, the measurement gap length is variable and can range from 1 ms to 5 ms. In previous solutions, the measurement gap of 6 ms was selected to ensure a sufficient period of time to find at least one pair of synchronization symbols. When the UE performs measurements for other frequency cells, the synchronization is completed first and then the measurements are taken. The 6 ms can allow at least one pair of synchronization symbols to be contained within the 6 ms period because the synchronization symbols repeat every 5 ms. The previous solutions describe an asynchronous network being used, in which case the UE does not previously know the location of the synchronization symbols. As a result, the UE has to wait the entire 6 ms to obtain the synchronization pair. However, in the synchronous network utilized in the current technology, the UE 210 can know at which locations these synchronization symbols can be located. In the synchronous network, there is synchronization between the different frequencies. Therefore, the UE 210 does not have to wait the entire 6 ms, as in previous solutions. Rather, the UE 210 can use 1 ms to 5 ms to perform the measurement, depending on the location of the synchronization symbol. By reducing the measurement gap, downlink resources can be saved. For example, using 6 subframes out of every 40 subframes consumes 15% of the available resources. However, using 3 subframes out of every 40 subframes consumes 7.5% of the available resources, which is a significant reduction.

In one configuration, the MGRP can be variable based on a purpose of the inter-frequency measurements. Depending on the UE's power saving strategy and the purpose of the measurement (e.g., cell identification, cell measurement, and network control interruption), the eNB 220 can configure variable measurement gap patterns for either concurrent or non-concurrent measurement. Therefore, the UE 210 can perform measurements for a first RF chain less often as compared to a second RF chain, depending on the purpose of the first and second RF chains. In other words, an unevenly distributed measurement gap pattern can be configured for the UE 210.

In one example, the UE 210 can be served by a macro cell that guarantees coverage for the UE 210. In other words, the UE 210 is unlikely to be disconnected from the macro cell. The UE has another RF chain to connect to a small cell. The small cell can be used for data offloading. In other words, the UE 210 can also use the small cell when large amounts of data are to be communicated to the UE 210. If the UE 210 does not have any coverage concerns (i.e., the macro cell is assumed to generally cover the UE 210), then the UE 210 only has to measure other cell frequencies (e.g., the small cell) for offloading purposes. Therefore, the UE 210 does not have to measure the small cell as often. In other words, since the UE 210 generally does not have to worry about its coverage, the UE 210 does not have to measure the other cell frequencies as often. Even if the UE 210 loses the connection with the small cell, the UE 210 can take its time to look for another small cell (if at all) because the UE 210 is still covered by the macro cell. Compared to inter-frequency measurements for coverage, inter-frequency measurements for offloading purposes have less measurement delay requirements. So based on whether the UE 210 is measuring the macro cell for coverage purposes or whether the UE 210 is measuring the small cell for offloading purposes, the eNB 220 can adjust a density of the measurement gap pattern.

In one example, the density of the measurement gap pattern can be adjusted based on the UE's speed. If the UE's speed is high, then the UE 210 could have potential coverage concerns. In this case, the eNB 220 can configure a denser measurement gap pattern (e.g., an existing rule of 6 ms for every 40 ms can be used). When the network detects that the UE's speed is low, then there can be no coverage issues. In this case, the eNB 220 can schedule a sparse measurement gap pattern, which can save downlink resources and conserve the UE's power. A non-limiting example of a sparse measurement pattern could be using 4 ms to perform the measurements out of every 120 ms. The measurement gap pattern can depend on the UE's status and the UE's coverage condition. Thus, the UE's velocity can be one factor used to adjust the gap pattern density (i.e., how often the measurements are performed).

In one example, the density of the measurement gap pattern can be adjusted based on the user's quality of the connection. If the RSRP from the macro cell is weak, then the network can determine that the UE 210 has potential coverage issues. In this case, the eNB 220 can configure a relatively dense measurement gap pattern, regardless of the UE's speed being fast or slow. Thus, the RSRP (or channel quality) is another factor that can affect the density of the measurement gap patterns. On the other hand, if the RSRP is relatively good and the UE's speed is low, then the eNB 220 can configure a spare measurement gap pattern. Another factor that can affect the density of the measurement gap pattern is how many frequencies the UE 210 is to monitor. In previous versions of the LTE specification, UEs can monitor up to eleven frequencies. In this case, the network can assign relatively dense measurement gap patterns in order to measure all of the necessary cells. If the UE has few frequencies (or cells) to monitor, then a sparse or less dense measurement gap pattern can be configured by the eNB 220.

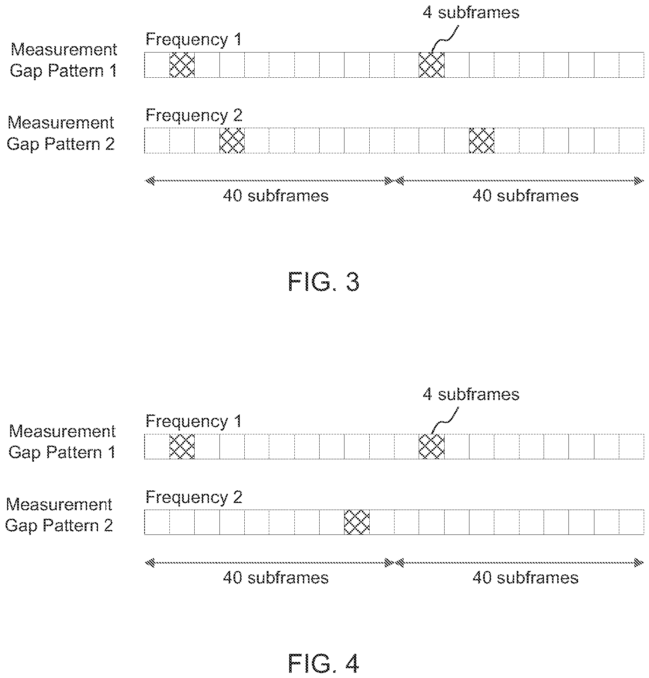

FIG. 3 illustrates exemplary multiple measurement gap patterns for a user equipment (UE). The multiple measurement gap patterns can include measurement gap pattern 1 and measurement gap pattern 2. The multiple measurement gap patterns can be configured by an evolved node B (eNB) for the UE. The UE can be configured to simultaneously implement the multiple measurement gap patterns. In other words, the UE can implement measurement gap pattern 1 in parallel with measurement gap pattern 2. Thus, the eNB can configure multiple measurement gap patterns per UE for more than one RF chain.

According to measurement gap pattern 1, the UE can spend 4 subframes (or 4 seconds) monitoring a frequency 1 (e.g., corresponding to a first cell) for every 40 subframes. For example, the UE can spend subframes 5-8 in a 40 subframe time frame performing the measurements. At the end of the 40 subframe period, the UE can repeat the same measurement gap (i.e., the UE can spend subframes 5-8 in the following 40 subframe time frame). According to measurement gap pattern 2, the UE can spend 4 subframes monitoring a frequency 2 (e.g., corresponding to a second cell) for every 40 subframes. For example, the UE can spend subframes 13-16 in a 40 subframe time frame performing the measurements. At the end of the 40 subframe period, the UE can repeat the same measurement gap (i.e., the UE can spend subframes 13-16 in the following 40 subframe time frame). In both measurement gap pattern 1 and measurement gap pattern 2, the UE can repeat the measurements every 40 subframes.

FIG. 4 illustrates exemplary multiple measurement gap patterns for a user equipment (UE). The multiple measurement gap patterns can include measurement gap pattern 1 and measurement gap pattern 2. According to measurement gap pattern 1, the UE can spend 4 subframes (or 4 seconds) monitoring a frequency 1 (e.g., corresponding to a first cell) for every 40 subframes. According to measurement gap pattern 2, the UE can spend 4 subframes monitoring a frequency 2 (e.g., corresponding to a second cell) for every 80 subframes. Thus, the UE can repeat the measurements every 40 subframes for measurement gap pattern, while the measurements for measurement gap pattern 2 are repeated every 80 subframes.

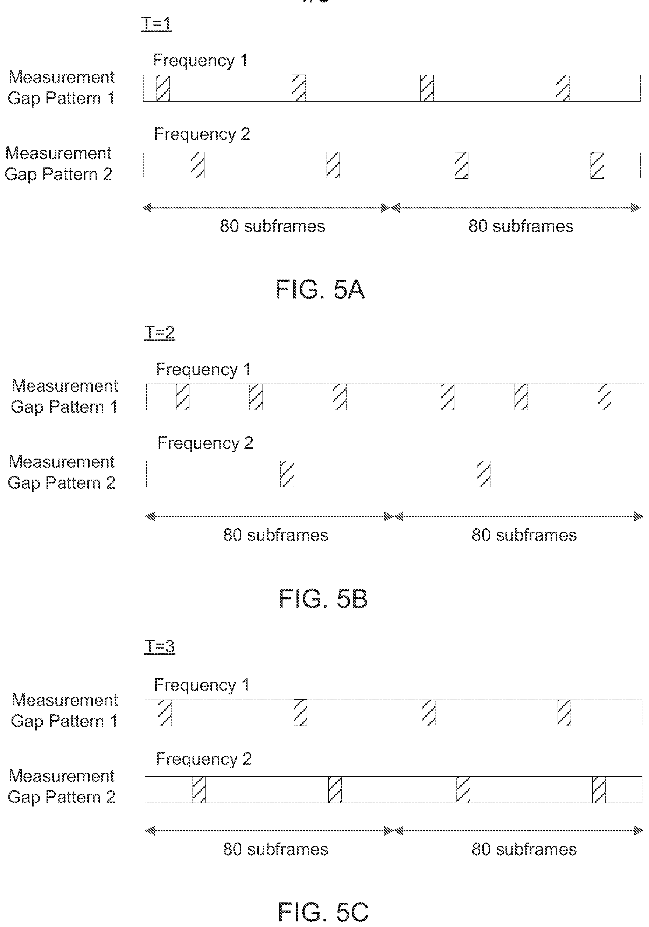

FIGS. 5A-5C illustrate exemplary multiple measurement gap patterns for a user equipment (UE) for various times. The multiple measurement gap patterns can include measurement gap pattern 1 and measurement gap pattern 2. The multiple measurement gap patterns can be configured by an evolved node B (eNB) for the UE.

As shown in FIG. 5A, the UE can implement measurement gap pattern 1 and measurement gap pattern 2 at T=1. According to measurement gap pattern 1, the UE can spend a defined number of subframes (e.g., 2-5 subframes) monitoring a frequency 1 (e.g., corresponding to a first cell) for every 40 subframes. According to measurement gap pattern 2, the UE can spend a defined number of subframes (e.g., 2-5 subframes) monitoring a frequency 2 (e.g., corresponding to a second cell) for every 40 subframes.

As shown in FIG. 5B, the UE can implement a modified measurement gap pattern 1 and a modified measurement gap pattern 2 at T=2. In one example, the eNB can modify the measurement gap patterns based on a traffic load at a particular cell (or RF chain). If the traffic load on frequency 2 (e.g., corresponding to the second cell) is relatively high as compared to the traffic load on frequency 1 (e.g., corresponding to the first cell), then the eNB can temporarily rebalance the measurement work among the multiple RF chains. Therefore, according to the modified measurement gap pattern 1, the UE can perform three sets of measurements for frequency 1 (e.g., corresponding to the first cell) for every 80 subframes. According to the modified measurement gap pattern 2, the UE can perform just one measurement for frequency 2 (e.g., corresponding to the second cell) for every 80 subframes. In other words, the eNB can lessen the measurement load for frequency 2 because of the relatively high amount of traffic on frequency 2. By lessening the measurement load for frequency 2, additional resources can be obtained (that would otherwise go towards performing the measurements). In addition, the eNB can increase the measurement load for frequency 1 because the amount of traffic on frequency 1 is relatively low.

As shown in FIG. 5C, the UE can revert back to an original measurement gap pattern 1 and measurement gap pattern 2 at T=3. The UE can revert back to the original gap measurement patterns when the traffic conditions have returned back to a defined level. For example, if the amount of traffic on frequency 1 has decreased back to the defined level, then the UE can implement the previous measurement gap pattern 2 (e.g., two measurements for each 80 subframe window).

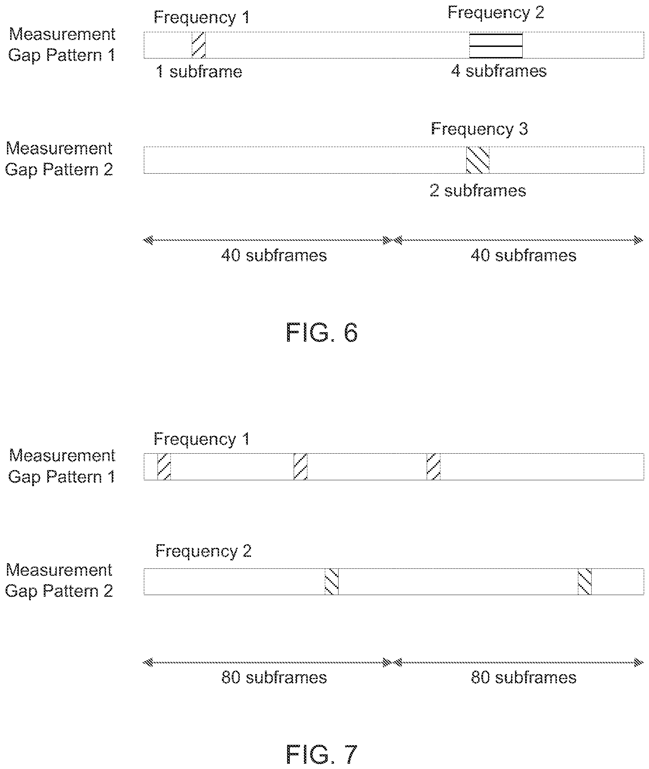

FIG. 6 illustrate exemplary multiple measurement gap patterns for a user equipment (UE). The multiple measurement gap patterns can include measurement gap pattern 1 and measurement gap pattern 2. The multiple measurement gap patterns can be configured by an evolved node B (eNB) for the UE. According to measurement gap pattern 1, the UE can perform measurements for a first RF chain (e.g., frequency 1) and a second RF chain (e.g., frequency 2). The UE can spend 1 subframe performing the measurements for the first RF chain. In addition, the UE can spend 4 subframes performing the measurements for the second RF chain. According to measurement gap pattern 2, the UE can perform measurements for a third RF chain (e.g., frequency 2) during a 2-subframe period. Thus, the measurement gap length (i.e., the period during which the UE performs the measurements) can be variable. In one example, the measurement gap length can be variable based on a location of synchronization symbols which are detected when the UE performs the measurements for a particular frequency.

FIG. 7 illustrate exemplary multiple measurement gap patterns for a user equipment (UE). The multiple measurement gap patterns can include measurement gap pattern 1 and measurement gap pattern 2. The multiple measurement gap patterns can be configured by an evolved node B (eNB) and then communicated to the UE. According to measurement gap pattern 1, the UE can perform two measurements for a first RF chain (e.g., frequency 1) during an 80-subframe period and then perform a single measurement for the first RF chain during a subsequent 80-subframe period. Thus, the UE can implement an unevenly distributed measurement gap pattern when performing measurements of the first RF chain. On the other hand, the UE can follow an evenly distributed measurement gap pattern when performing measurements for a second RF chain every 80 subframes (e.g., frequency 2). In other words, measurement gap pattern 1 provides aperiodic measurement gaps, whereas measurement gap pattern 2 provides periodic measurement gaps.

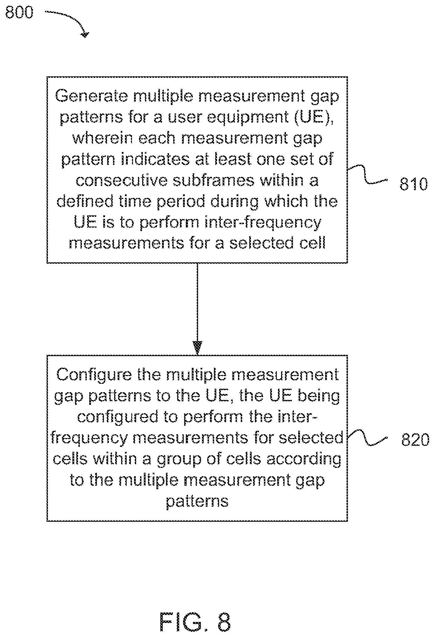

Another example provides functionality 800 of an evolved node B (eNB) operable to configure measurement gap patterns, as shown in the flow chart in FIG. 8. The functionality can be implemented as a method or the functionality can be executed as instructions on a machine, where the instructions are included on at least one computer readable medium or one non-transitory machine readable storage medium. The eNB can include one or more processors configured to generate multiple measurement gap patterns for a user equipment (UE), wherein each measurement gap pattern indicates at least one set of consecutive subframes within a defined time period during which the UE is to perform inter-frequency measurements for a selected cell, as in block 810. The eNB can include one or more processors configured to configure the multiple measurement gap patterns to the UE, the UE being configured to perform the inter-frequency measurements for selected cells within a group of cells according to the multiple measurement gap patterns, as in block 820.

In one example, the one or more processors can be configured to configure the multiple measurement gap patterns to the UE to enable the UE to simultaneously perform inter-frequency measurements for multiple cells. In another example, the one or more processors can further configured to modify the multiple measurement gap patterns based on current traffic conditions for the selected cells within the group of cells. In yet another example, the defined time period in the measurement gap pattern is a measurement gap repetition period (MGRP), wherein the MGRP is variable based on a purpose of the inter-frequency measurements.

In one example, each cell within the group of cells operates in a defined frequency layer and is measured using a particular measurement gap pattern. In another example, a measurement gap length (MGL) during which the UE performs the inter-frequency measurements for the selected cell is variable based on a location of synchronization symbols which are detected when the UE performs the inter-frequency measurements for the selected cell, the MGL corresponding to the set of consecutive subframes within the defined time period. In yet another example, the set of consecutive subframes during which the UE performs the inter-frequency measurements range from 1 millisecond (ms) to 5 ms in length.

In one example, the one or more processors can be further configured to adjust a density of the multiple measurement gap patterns based on at least one of: a speed of the UE, a quality at the UE, or a number of cells for which the UE performs the inter-frequency measurements. In another example, the defined time period is at least one of: 40 milliseconds (ms), 80 ms, 120 ms, 160 ms, 200 ms or 240 ms. In yet another example, the selected cell within the group of cells is at least one of: a macro cell, a micro cell, a pico cell or a femto cell. In one configuration, the inter-frequency measurements for the selected cell include reference signal received power (RSRP) measurements or reference signal received quality (RSRQ) measurements. In another configuration, the group of cells for which the UE performs the inter-frequency measurements are used for carrier aggregation or data offloading.

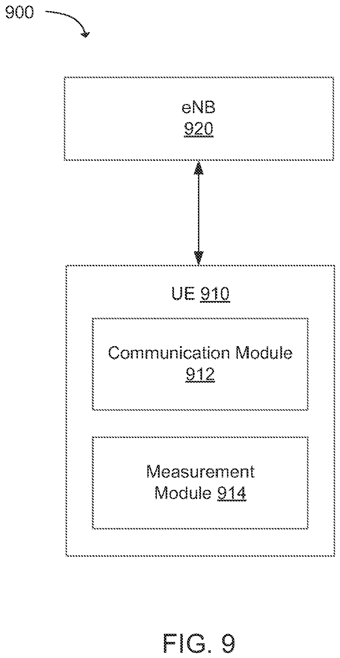

Another example provides functionality 900 of a user equipment (UE) 910 configured to perform inter-frequency measurements, as shown in the flow chart in FIG. 9. The functionality can be implemented as a method or the functionality can be executed as instructions on a machine, where the instructions are included on at least one computer readable medium or one non-transitory machine readable storage medium. The UE 910 can include a communication module 912 configured to identify multiple measurement gap patterns configured by an evolved node B (eNB) 920, wherein each measurement gap pattern indicates at least one set of consecutive subframes within a defined time period during which the UE 910 is to perform inter-frequency measurements for a selected cell. The UE 910 can include a measurement module 914 configured to perform the inter-frequency measurements for selected cells within a group of cells in accordance with the multiple measurement gap patterns configured by the eNB 920.

In one example, the measurement module 914 can be further configured to simultaneously perform inter-frequency measurements for multiple cells in accordance with the multiple measurement gap patterns configured by the eNB 920. In one example, the communication module 912 can further configured to receive updated multiple measurement gap patterns that are modified based on current traffic conditions for the selected cells within the group of cells; and the measurement module 914 can be further configured to perform the inter-frequency measurements according to the updated multiple measurement gap patterns.

In one example, each cell within the group of cells operates in a defined frequency layer and is measured using a particular measurement gap pattern. In another example, the defined time period is a measurement gap repetition period (MGRP), the MGRP being variable based on a purpose of the inter-frequency measurements. In yet another example, the measurement module 914 can be further configured to perform the inter-frequency measurements for up to eleven cells in accordance with the multiple measurement gap patterns. In addition, a measurement gap length (MGL) during which the UE 910 performs the inter-frequency measurements for the selected cell is variable based on a location of synchronization symbols which are detected when the UE 910 performs the inter-frequency measurements for the selected cell, the MGL corresponding to the set of consecutive subframes within the defined time period.

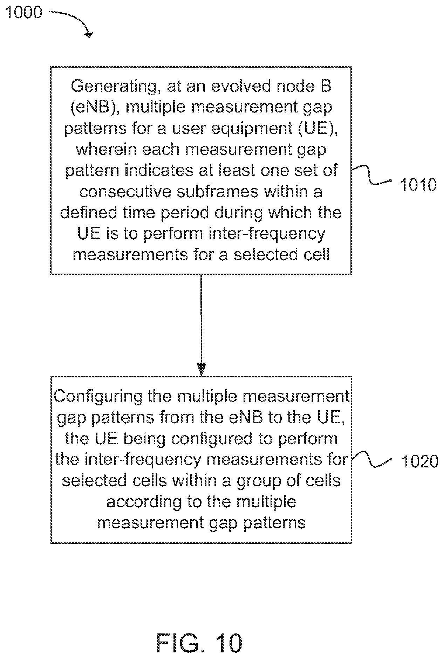

Another example provides a method 1000 for configuring measurement gap patterns, as shown in the flow chart in FIG. 10. The method can be executed as instructions on a machine, where the instructions are included on at least one computer readable medium or one non-transitory machine readable storage medium. The method can include the operation of generating, at an evolved node B (eNB), multiple measurement gap patterns for a user equipment (UE), wherein each measurement gap pattern indicates at least one set of consecutive subframes within a defined time period during which the UE is to perform inter-frequency measurements for a selected cell, as in block 1010. The method can include the operation of configuring the multiple measurement gap patterns from the eNB to the UE, the UE being configured to perform the inter-frequency measurements for selected cells within a group of cells according to the multiple measurement gap patterns, as in block 1020.

In one example, the method can include the operation of modifying the multiple measurement gap patterns based on current traffic conditions for the selected cells within the group of cells. In another example, the method can include the operation of generating the multiple measurement gap patterns to include variable measurement gap lengths (MGLs) during which the UE is to perform the inter-frequency measurements for the selected cell is.

In one example, the method can include the operation of adjusting a density of the multiple measurement gap patterns based on at least one of: a speed of the UE, a channel quality at the UE, or a number of cells for which the UE performs the inter-frequency measurements. In another example, the method can include the example of generating the multiple measurement gap patterns to include at least one set of consecutive subframes during which the UE is to perform the inter-frequency measurements, the set of consecutive subframes ranging from 1 millisecond (ms) to 5 ms in length. In yet another example, the method can include the operation of setting the defined time period in the multiple measurement gap patterns to be at least one of: 40 milliseconds (ms), 80 ms, 120 ms, 160 ms, 200 ms or 240 ms.

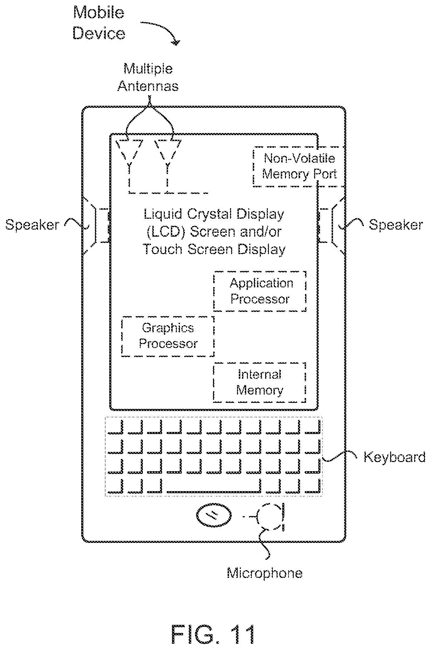

FIG. 11 provides an example illustration of the wireless device, such as an user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard including 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN.

FIG. 11 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, can take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a RAM, EPROM, flash drive, optical drive, magnetic hard drive, solid state drive, or other medium for storing electronic data. The node and wireless device can also include a transceiver module, a counter module, a processing module, and/or a clock module or timer module. One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

It should be understood that many of the functional units described in this specification have been labeled as modules, in order to more particularly emphasize their implementation independence. For example, a module can be implemented as a hardware circuit comprising custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits can be used to implement the functional units described in this specification. For example, a first hardware circuit can be used to perform processing operations and a second hardware circuit (e.g., a transceiver) can be used to communicate with other entities. The first hardware circuit and the second hardware circuit can be integrated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

## Claims

1. An evolved node B, eNB, (220) in a synchronous network, adapted to configure measurement gap patterns, the eNB having one or more processors configured to:
generate multiple measurement gap patterns from a plurality of radio frequency, RF, chains for a user equipment, UE, (210) having a plurality of RF chains, to enable the UE to perform concurrent measurement of the multiple measurement gap patterns using the plurality of RF chains, wherein each measurement gap pattern indicates one set of consecutive subframes within a defined time period during which the UE is to perform inter-frequency measurements for a selected cell, wherein the defined time period in the measurement gap pattern is a measurement gap repetition period, MGRP, wherein the MGRP is variable based on a purpose of the inter-frequency measurements and each cell within the group of cells operates in a defined frequency layer and is measured using a particular measurement gap pattern;
provide the multiple measurement gap patterns to the UE, the UE being configured to perform the inter-frequency measurements using the plurality of RF chains for selected cells within a group of cells according to the multiple measurement gap patterns; and
wherein a measurement gap length, MGL, during which the UE performs the inter-frequency measurements for the selected cell is variable based on a location of synchronization symbols which are detected when the UE performs the inter-frequency measurements for the selected cell, the MGL corresponding to the set of consecutive subframes within the defined time period.

2. The eNB of claim 1, wherein the one or more processors are configured to:
configure the multiple measurement gap patterns to the UE to enable the UE to simultaneously perform inter-frequency measurements for multiple cells; or
modify the multiple measurement gap patterns based on current traffic conditions for the selected cells within the group of cells.

3. The eNB of claim 1, wherein the set of consecutive subframes during which the UE performs the inter-frequency measurements range from 1 millisecond, ms, to 5 ms in length.

4. The eNB of claim 1, wherein the one or more processors are further configured to adjust a density of the multiple measurement gap patterns based on at least one of: a speed of the UE, a quality at the UE, or a number of cells for which the UE performs the inter-frequency measurements.

5. The eNB of claim 1, wherein:
the defined time period is at least one of: 40 milliseconds, ms, 80 ms, 120 ms, 160 ms, 200 ms or 240 ms; or
the inter-frequency measurements for the selected cell include reference signal received power, RSRP, measurements or reference signal received quality, RSRQ, measurements; or
the group of cells for which the UE performs the inter-frequency measurements are used for carrier aggregation or data offloading.

6. A user equipment, UE, (210) configured to perform inter-frequency measurements in a synchronous network, the UE comprising:
a communication module configured to identify multiple measurement gap patterns configured by an evolved node B, eNB, (220) wherein a concurrent measurement of the multiple gap patterns is performed at the UE using a plurality of radio frequency, RF, chains, wherein each measurement gap pattern indicates one set of consecutive subframes within a defined time period during which the UE is to perform inter-frequency measurements for a selected cell wherein the defined time period in the measurement gap pattern is a measurement gap repetition period, MGRP, wherein the MGRP is variable based on a purpose of the inter-frequency measurements and each cell within the group of cells operates in a defined frequency layer and is measured using a particular measurement gap pattern;
wherein the communication module is stored in a digital memory device or is implemented in a hardware circuit;
a measurement module configured to perform the inter-frequency measurements for selected cells within a group of cells in accordance with the multiple measurement gap patterns configured by the eNB, wherein the measurement module is stored in a digital memory device or is implemented in a hardware circuit; and
wherein a measurement gap length, MGL, during which the UE performs the inter-frequency measurements for the selected cell is variable based on a location of synchronization symbols which are detected when the UE performs the inter-frequency measurements for the selected cell, the MGL corresponding to a set of consecutive subframes within the defined time period.

7. The UE of claim 6, wherein the measurement module is further configured to simultaneously perform inter-frequency measurements for multiple cells in accordance with the multiple measurement gap patterns configured by the eNB.

8. The UE of claim 7, wherein:
the communication module is further configured to receive updated multiple measurement gap patterns that are modified based on current traffic conditions for the selected cells within the group of cells; and
the measurement module is further configured to perform the inter-frequency measurements according to the updated multiple measurement gap patterns.

9. The UE of claim 7, wherein:
the MGRP, the MGRP is variable based on a purpose of the inter-frequency measurements.

10. The UE of claim 7, wherein the measurement module is further configured to perform the inter-frequency measurements for up to eleven cells in accordance with the multiple measurement gap patterns.

11. A method (1000), performed by an evolved node B, eNB, for configuring measurement gap patterns in a synchronous network, the method comprising:
generating (1010) multiple measurement gap patterns from a plurality of radio frequency, RF, chains for a user equipment. UE, (210) having a plurality of RF chains, to enable the UE to perform concurrent measurement of the multiple measurement gap patterns using the plurality of RF chains, wherein each measurement gap pattern indicates one set of consecutive subframes within a defined time period during which the UE is to perform inter-frequency measurements for a selected cell, wherein the defined time period in the measurement gap pattern is a measurement gap repetition period, MGRP, wherein the MGRP is variable based on a purpose of the inter-frequency measurements and each cell within the group of cells operates in a defined frequency layer and is measured using a particular measurement gap pattern;
providing (1020) the multiple measurement gap patterns from the eNB to the UE, the UE being configured to perform the inter-frequency measurements for selected cells within a group of cells concurrently using the plurality of RF chains according to the multiple measurement gap patterns; and
wherein a measurement gap length, MGL, during which the UE performs the inter-frequency measurements for the selected cell is variable based on a location of synchronization symbols which are detected when the UE performs the inter-frequency measurements for the selected cell, the MGL corresponding to the set of consecutive subframes within the defined time period.

12. The method of claim 11, further comprising:
modifying the multiple measurement gap patterns based on current traffic conditions for the selected cells within the group of cells.

13. The method of claim 12, further comprising adjusting a density of the multiple measurement gap patterns based on at least one of: a speed of the UE, a channel quality at the UE, or a number of cells for which the UE performs the inter-frequency measurements.

14. The method of claim 12, further comprising generating the multiple measurement gap patterns to include at least one set of consecutive subframes during which the UE is to perform the inter-frequency measurements, the set of consecutive subframes ranging from 1 millisecond, ms, to 5 ms in length.

## Patentansprüche

1. Evolved Node B, eNB, (220) in einem synchronen Netzwerk, der zur Konfiguration von Messlückenmustern geeignet ist, wobei die eNB einen oder mehrere Prozessoren hat, die konfiguriert sind zum:
Erzeugen mehrerer Messlückenmuster aus einer Vielzahl von Hochfrequenz-, HF-Ketten für eine Benutzervorrichtung, UE, (210) mit einer Vielzahl von HF-Ketten, um die UE zu ermöglichen, eine gleichzeitige Messung der mehreren Messlückenmuster unter Verwendung der Vielzahl von HF-Ketten durchzuführen, wobei jedes Messlückenmuster einen Satz von aufeinanderfolgenden Unterrahmen innerhalb einer definierten Zeitperiode anzeigt, während der die UE Interfrequenzmessungen für eine ausgewählte Zelle durchführen soll, wobei die definierte Zeitperiode in dem Messlückenmuster eine Messlückenwiederholungsperiode, MGRP, ist, wobei die MGRP basierend auf einen Zweck der Interfrequenzmessungen variabel ist und jede Zelle innerhalb der Gruppe von Zellen in einer definierten Frequenzschicht arbeitet und unter Verwendung eines bestimmten Messlückenmusters gemessen wird;
Bereitstellen der mehrerer Messlückenmuster für die UE, wobei die UE konfiguriert ist, um die Interfrequenzmessungen unter Verwendung der Vielzahl von HF-Ketten für ausgewählte Zellen innerhalb einer Gruppe von Zellen gemäß den mehreren Messlückenmustern durchzuführen; und
wobei eine Messlückenlänge, MGL, während der die UE die Interfrequenzmessungen für die ausgewählte Zelle durchführt, variabel ist, basierend auf einer Position von Synchronisationssymbolen, die erfasst werden, wenn die UE die Interfrequenzmessungen für die ausgewählte Zelle durchführt, wobei die MGL dem Satz von aufeinanderfolgenden Unterrahmen innerhalb der definierten Zeitperiode entspricht.

2. eNB nach Anspruch 1, wobei der eine oder mehrere Prozessoren konfiguriert sind zum:
Konfigurieren der mehreren Messlückenmuster zu der UE, um die UE zu ermöglichen, gleichzeitig Interfrequenzmessungen für mehrere Zellen durchzuführen; oder
Modifizieren der mehrere Messlückenmuster basierend auf den aktuellen Verkehrsbedingungen für die ausgewählten Zellen innerhalb der Gruppe von Zellen.

3. eNB nach Anspruch 1, wobei der Satz von aufeinanderfolgenden Unterrahmen, während dessen die UE die Interfrequenzmessungen durchführt, eine Länge von 1 Millisekunde, ms, bis 5 ms hat.

4. eNB nach Anspruch 1, wobei der eine oder die mehreren Prozessoren ferner konfiguriert sind, um eine Dichte der mehreren Messlückenmuster einzustellen basierend auf mindestens einer der folgenden: eine Geschwindigkeit der UE, eine Qualität an der UE oder eine Anzahl von Zellen, für die das UE die Interfrequenzmessungen durchführt.

5. eNB nach Anspruch 1, wobei:
die definierte Zeitperiode mindestens eine der Folgenden ist: 40 Millisekunden, ms, 80 ms, 120 ms, 160 ms, 200 ms oder 240 ms; oder
die Interfrequenzmessungen für die ausgewählte Zelle umfassen Referenzsignal-Empfangsleistung, RSRP, Messungen oder Referenzsignal-Empfangsqualität, RSRQ, Messungen; oder
die Gruppe von Zellen, für die die UE die Interfrequenzmessungen durchführt, für die Trägeraggregation oder das Daten-Offloading verwendet werden.

6. Benutzervorrichtung, UE, (210) konfiguriert zur Durchführung von Interfrequenzmessungen in einem synchronen Netzwerk, wobei die UE umfasst:
ein Kommunikationsmodul, das konfiguriert ist, um mehrere Messlückenmuster zu identifizieren, die durch eine Evolved Node B, eNB, (220) konfiguriert sind, wobei eine gleichzeitige Messung der mehreren Messlückenmuster an der UE unter Verwendung einer Vielzahl von Hochfrequenz-, HF-, Ketten durchgeführt wird, wobei jedes Messlückenmuster einen Satz von aufeinanderfolgenden Unterrahmen innerhalb einer definierten Zeitperiode anzeigt, während der die UE Interfrequenzmessungen für eine ausgewählte Zelle durchführen soll, wobei die definierte Zeitperiode in dem Messlückenmuster eine Messlückenwiederholungsperiode, MGRP, ist, wobei die MGRP basierend auf einem Zweck der Interfrequenzmessungen variabel ist und jede Zelle innerhalb der Gruppe von Zellen in einer definierten Frequenzschicht arbeitet und unter Verwendung eines bestimmten Messlückenmusters gemessen wird;
wobei das Kommunikationsmodul in einer digitalen Speichervorrichtung gespeichert ist oder in einer Hardwareschaltung implementiert ist;
ein Messmodul, das konfiguriert ist, um die Interfrequenzmessungen für ausgewählte Zellen innerhalb einer Gruppe von Zellen in Übereinstimmung mit den durch den eNB konfigurierten Mehrfachmess-Lückenmustern durchzuführen, wobei das Messmodul in einer digitalen Speichervorrichtung gespeichert oder in einer Hardwareschaltung implementiert ist; und
wobei eine Messlückenlänge, MGL, während der die UE die Interfrequenzmessungen für die ausgewählte Zelle durchführt, basierend auf eine Position von Synchronisationssymbolen, die erfasst werden, wenn das UE die Interfrequenzmessungen für die ausgewählte Zelle durchführt, variabel ist, wobei die MGL einem Satz von aufeinanderfolgenden Unterrahmen innerhalb der definierten Zeitperiode entspricht.

7. UE nach Anspruch 6, wobei das Messmodul ferner konfiguriert ist, um gleichzeitig Interfrequenzmessungen für mehrere Zellen gemäß den durch den eNB konfigurierten mehreren Messlückenmustern durchzuführen.

8. UE nach Anspruch 7, wobei:
das Messmodul ferner konfiguriert ist, um Interfrequenzmessungen für mehrere Zellen gleichzeitig durchzuführen:
das Kommunikationsmodul ferner konfiguriert ist, um aktualisierte mehrere Messlückenmuster zu empfangen, die basierend auf die aktuellen Verkehrsbedingungen für die ausgewählten Zellen modifiziert werden.

9. UE nach Anspruch 7, wobei:
die MGRP, die MGRP ist variabel, basierend auf einem Zweck der Interfrequenzmessungen.

10. UE nach Anspruch 7, wobei das Messmodul ferner konfiguriert ist, um die Interfrequenzmessungen für bis zu elf Zellen in Übereinstimmung mit den Lückenmustern für mehrere Messungen durchzuführen.

11. Verfahren (1000) zum Konfigurieren von Messlückenmustern in einem synchronen Netzwerk, wobei das Verfahren umfasst:
Erzeugen (1010) von mehreren Messlückenmustern aus einer Vielzahl von Hochfrequenz-(HF)-Ketten für eine Benutzervorrichtung, UE, (210) mit einer Vielzahl von HF-Ketten, um die UE zu ermöglichen, eine gleichzeitige Messung der mehreren Messlückenmuster unter Verwendung der Vielzahl von HF-Ketten durchzuführen, wobei jedes Messlückenmuster einen Satz von aufeinanderfolgenden Unterrahmen innerhalb einer definierten Zeitperiode anzeigt, während der die UE Interfrequenzmessungen für eine ausgewählte Zelle durchführen soll, wobei die definierte Zeitperiode in dem Messlückenmuster eine Messlückenwiederholungsperiode, MGRP, ist, wobei die MGRP basierend auf einen Zweck der Interfrequenzmessungen variabel ist und jede Zelle innerhalb der Gruppe von Zellen in einer definierten Frequenzschicht arbeitet und unter Verwendung eines bestimmten Messlückenmusters gemessen wird;
Bereitstellen (1020) der mehreren Messlückenmuster von der eNB zu der UE, wobei die UE konfiguriert ist, um die Interfrequenzmessungen für ausgewählte Zellen innerhalb einer Gruppe von Zellen gleichzeitig unter Verwendung der Vielzahl von HF-Ketten gemäß den Mehrfachmess-Lückenmustern durchzuführen; und
wobei eine Messlückenlänge, MGL, während der die UE die Interfrequenzmessungen für die ausgewählte Zelle durchführt, basierend auf eine Position von Synchronisationssymbolen, die erfasst werden, wenn die UE die Interfrequenzmessungen für die ausgewählte Zelle durchführt, variabel ist, wobei die MGL dem Satz von aufeinanderfolgenden Unterrahmen innerhalb der definierten Zeitperiode entspricht.

12. Verfahren nach Anspruch 11, ferner umfassend:
Modifizieren der mehreren Messlückenmuster basierend auf die aktuellen Verkehrsbedingungen für die ausgewählten Zellen innerhalb der Gruppe von Zellen.

13. Verfahren nach Anspruch 12, ferner umfassend: Einstellen einer Dichte der mehreren Messlückenmuster basierend auf mindestens einem von: einer Geschwindigkeit der UE, einer Kanalqualität an der UE oder einer Anzahl von Zellen, für die die UE die Interfrequenzmessungen durchführt.

14. Verfahren nach Anspruch 12, ferner umfassend Erzeugen der mehreren Messlückenmuster, so dass sie mindestens einen Satz von aufeinanderfolgenden Unterrahmen enthalten, während denen das UE die Interfrequenzmessungen durchführen soll, wobei der Satz von aufeinanderfolgenden Unterrahmen eine Länge von 1 Millisekunde, ms, bis 5 ms hat.

## Revendications

1. Un nœud B évolué, eNB, (220) dans un réseau synchrone, adapté pour configurer des modèles d'intervalle de mesure, l'eNB ayant un ou plusieurs processeurs configurés pour :
générer de multiples modèles d'intervalle de mesure à partir d'une pluralité de chaînes radiofréquence, RF, pour un équipement utilisateur, UE, (210) ayant une pluralité de chaînes RF, pour permettre à l'UE d'effectuer une mesure concurrente des multiples modèles d'intervalle de mesure en utilisant la pluralité de chaînes RF, dans lequel chaque modèle d'intervalle de mesure indique un ensemble de sous-trames consécutives dans une période de temps définie pendant laquelle l'UE doit effectuer des mesures inter-fréquences pour une cellule sélectionnée, dans lequel la période de temps définie dans le modèle d'intervalle de mesure est une période de répétition d'intervalle de mesure, MGRP, dans lequel la MGRP est variable sur la base d'un objet des mesures inter-fréquences et chaque cellule dans le groupe de cellules fonctionne dans une couche de fréquence définie et est mesurée en utilisant un modèle d'intervalle de mesure particulier ;
fournir les multiples modèles d'intervalle de mesure à l'UE, l'UE étant configuré pour effectuer les mesures inter-fréquences en utilisant la pluralité de chaînes RF pour des cellules sélectionnées dans un groupe de cellules selon les multiples modèles d'intervalle de mesure ; et
dans lequel une longueur d'intervalle de mesure, MGL, pendant laquelle l'UE effectue les mesures inter-fréquences pour la cellule sélectionnée est variable sur la base d'un emplacement de symboles de synchronisation qui sont détectés lorsque l'UE effectue les mesures inter-fréquences pour la cellule sélectionnée, la MGL correspondant à l'ensemble de sous-trames consécutives dans la période de temps définie.

2. L'eNB selon la revendication 1, dans lequel les un ou plusieurs processeurs sont configurés pour :
configurer les multiples modèles d'intervalle de mesure vers l'UE pour permettre à l'UE d'effectuer simultanément des mesures inter-fréquences pour de multiples cellules ; ou
modifier les multiples modèles d'intervalle de mesure sur la base de conditions de trafic courantes pour les cellules sélectionnées dans le groupe de cellules.

3. L'eNB selon la revendication 1, dans lequel dans lequel l'ensemble de sous-trames consécutives pendant lequel l'UE effectue les mesures inter-fréquences va de 1 milliseconde, ms, à 5 ms de longueur.

4. L'eNB selon la revendication 1, dans lequel les un ou plusieurs processeurs sont en outre configurés pour ajuster une densité des multiples modèles d'intervalle de mesure sur la base d'au moins l'un parmi : une vitesse de l'UE, une qualité au niveau de l'UE, ou un nombre de cellules pour lesquelles l'UE effectue les mesures inter-fréquences.

5. L'eNB selon la revendication 1, dans lequel :
la période de temps définie est au moins l'une parmi : 40 millisecondes, ms, 80 ms, 120 ms, 160 ms, 200 ms ou 240 ms ; ou
les mesures inter-fréquences pour la cellule sélectionnée incluent des mesures de puissance reçue de signal de référence, RSRP, ou des mesures de qualité reçue de signal de référence, RSRQ ; ou
le groupe de cellules pour lequel l'UE effectue les mesures inter-fréquences est utilisé pour l'agrégation de porteuses ou le déchargement de données.

6. Un équipement utilisateur, UE, (210) configuré pour effectuer des mesures inter-fréquences dans un réseau synchrone, l'UE comprenant :
un module de communication configuré pour identifier de multiples modèles d'intervalle de mesure configurés par un nœud B évolué, eNB, (220), dans lequel une mesure concurrente des multiples modèles d'intervalle est effectuée au niveau de l'UE en utilisant une pluralité de chaînes radiofréquence, RF, dans lequel chaque modèle d'intervalle de mesure indique un ensemble de sous-trames consécutives dans une période de temps définie pendant laquelle l'UE doit effectuer des mesures inter-fréquences pour une cellule sélectionnée, dans lequel la période de temps définie dans le modèle d'intervalle de mesure est une période de répétition d'intervalle de mesure, MGRP, dans lequel la MGRP est variable sur la base d'un objet des mesures inter-fréquences et chaque cellule dans le groupe de cellules fonctionne dans une couche de fréquence définie et est mesurée en utilisant un modèle d'intervalle de mesure particulier,
dans lequel le module de communication est stocké dans un dispositif de mémoire numérique ou est mis en œuvre dans un circuit matériel ;
un module de mesure configuré pour effectuer les mesures inter-fréquences pour des cellules sélectionnées dans un groupe de cellules conformément aux multiples modèles d'intervalle de mesure configurés par l'eNB, dans lequel le module de mesure est stocké dans un dispositif de mémoire numérique ou est mis en œuvre dans un circuit matériel ; et
dans lequel une longueur d'intervalle de mesure, MGL, pendant laquelle l'UE effectue les mesures inter-fréquences pour la cellule sélectionnée est variable sur la base d'un emplacement de symboles de synchronisation qui sont détectés lorsque l'UE effectue les mesures inter-fréquences pour la cellule sélectionnée, la MGL correspondant à un ensemble de sous-trames consécutives dans la période de temps définie.

7. L'UE selon la revendication 6, dans lequel le module de mesure est en outre configuré pour effectuer simultanément des mesures inter-fréquences pour de multiples cellules conformément aux multiples modèles d'intervalle de mesure configurés par l'eNB.

8. L'UE selon la revendication 7, dans lequel :
le module de communication est en outre configuré pour recevoir de multiples modèles d'intervalle de mesure mis à jour qui sont modifiés sur la base de conditions de trafic courantes pour les cellules sélectionnées dans le groupe de cellules ; et
le module de mesure est en outre configuré pour effectuer les mesures inter-fréquences selon les multiples modèles d'intervalle de mesure mis à jour.

9. L'UE selon la revendication 7, dans lequel :
la MGRP est variable sur la base d'un objet des mesures inter-fréquences.

10. L'UE selon la revendication 7, dans lequel le module de mesure est en outre configuré pour effectuer les mesures inter-fréquences pour jusqu'à onze cellules conformément aux multiples modèles d'intervalle de mesure.

11. Un procédé (1000), effectué par un nœud B évolué, eNB, pour configurer des modèles d'intervalle de mesure dans un réseau synchrone, le procédé comprenant :
la génération (1010) de multiples modèles d'intervalle de mesure à partir d'une pluralité de chaînes radiofréquence, RF, pour un équipement utilisateur, UE, (210) ayant une pluralité de chaînes RF, pour permettre à l'UE d'effectuer une mesure concurrente des multiples modèles d'intervalle de mesure en utilisant la pluralité de chaînes RF, dans lequel chaque modèle d'intervalle de mesure indique un ensemble de sous-trames consécutives dans une période de temps définie pendant laquelle l'UE doit effectuer des mesures inter-fréquences pour une cellule sélectionnée, dans lequel la période de temps définie dans le modèle d'intervalle de mesure est une période de répétition d'intervalle de mesure, MGRP, dans lequel la MGRP est variable sur la base d'un objet des mesures inter-fréquences et chaque cellule dans le groupe de cellules fonctionne dans une couche de fréquence définie et est mesurée en utilisant un modèle d'intervalle de mesure particulier ;
la fourniture (1020) des multiples modèles d'intervalle de mesure de l'eNB à l'UE, l'UE étant configuré pour effectuer les mesures inter-fréquences pour des cellules sélectionnées dans un groupe de cellules concurremment en utilisant la pluralité de chaînes RF selon les multiples modèles d'intervalle de mesure ; et
dans lequel une longueur d'intervalle de mesure, MGL, pendant laquelle l'UE effectue les mesures inter-fréquences pour la cellule sélectionnée est variable sur la base d'un emplacement de symboles de synchronisation qui sont détectés lorsque l'UE effectue les mesures inter-fréquences pour la cellule sélectionnée, la MGL correspondant à l'ensemble de sous-trames consécutives dans la période de temps définie.

12. Le procédé selon la revendication 11, comprenant en outre :
la modification des multiples modèles d'intervalle de mesure sur la base de conditions de trafic courantes pour les cellules sélectionnées dans le groupe de cellules.

13. Le procédé selon la revendication 12, comprenant en outre l'ajustement d'une densité des multiples modèles d'intervalle de mesure sur la base d'au moins l'un parmi : une vitesse de l'UE, une qualité de canal au niveau de l'UE, ou un nombre de cellules pour lesquelles l'UE effectue les mesures inter-fréquences.

14. Le procédé selon la revendication 12, comprenant en outre la génération des multiples modèles d'intervalle de mesure pour inclure au moins un ensemble de sous-trames consécutives pendant lequel l'UE doit effectuer les mesures inter-fréquences, l'ensemble de sous-trames consécutives allant de 1 milliseconde, ms, à 5 ms de longueur.
